# EUROPÄISCHE PATENTSCHRIFT

(11) **EP 3 395 473 B1**
(45) Veröffentlichungstag und Bekanntmachung des Hinweises auf die Patenterteilung: **31.03.2021**
(21) Anmeldenummer: 17198230.9
(22) Anmeldetag: 07.07.2010
(51) Int. Cl.: B22D 18/04, B22D 18/06, B22D 18/08, B22D 17/30, B62D 21/00

(54) **VERFAHREN ZUM GIESSEN**
METHOD FOR CASTING
PROCÉDÉ DE COULÉE

(30) Priorität: 07.07.2009 DE 102009032148; 06.07.2010 DE 102010026293
(43) Veröffentlichungstag der Anmeldung: 31.10.2018
(62) Teilanmeldung aus: 10747149.2
(73) Patentinhaber: Fill Gesellschaft m.b.H., 4942 Gurten (AT)
(72) Erfinder: Heinecke, Sven, 38899 Hasselfelde (DE); März, Ingo, 38855 Wernigerode (DE); Oppelt, Holger, 06507 Bad Suderode (DE); Golz, Roland, 38855 Wernigerode (DE); Landgraf, Frank, 31162 Bad Salzdetfurth (DE); Boindecker, Alois, A-4942 Gurten (AT); Rathner, Thomas, A-4910 Ried im Innkreis (AT); Schneeberger, Alexander, A-4910 Ried im Innkreis (AT); Wiesinger, Alois, A-4675 Weibern (AT)
(74) Vertreter: Ofner, Clemens

(56) Entgegenhaltungen:
- EP-A1- 0 253 692
- EP-A1- 0 398 168
- EP-A1- 1 270 114
- EP-A1- 1 733 823
- DE-U1-202008 017 274
- GB-A- 1 471 882
- US-A- 4 825 772
- WUERKER L ET AL: "Radfuehrende Bauteile, hergestellt im CPC-Verfahren", GIESSEREI, GIESSEREI VERLAG, DUSSELDORF, DE, Bd. 92, Nr. 9, 1. Januar 2005 (2005-01-01) , Seiten 30-35, XP009139013, ISSN: 0016-9765

## Beschreibung

Die Erfindung betrifft ein Verfahren zum Gießen.

Solche Anlagen mit einer Gießvorrichtung insbesondere zum Gießen unter einem durch eine Gasphase erzeugten Druck finden in der Gießereitechnik, insbesondere für die Herstellung von Gussstücken mit hohen physikalischen und mechanischen Kennwerten, insbesondere aus Leichtmetall-Legierungen, Anwendung.

Aus der DE 1178979 A ist ein Druckgießverfahren bekannt, bei dem unter der Einwirkung eines Druckunterschieds eine Schmelze aus einem in einer hermetisch abgedichteten Speisekammer befindlichen Ofen durch ein Gießrohr in den Hohlraum einer Gießform befördert wird, wobei die Gießform in einer anderen hermetisch abgedichteten Ausgleichskammer angeordnet ist. In der Ausgleichskammer erstarrt das Gussstück bei der dort vorliegenden Temperatur und bei dem dort vorliegenden Druck. Anschließend wird das fertige Gussstück aus der Gießform entnommen und ein neuer Gießzyklus kann durchgeführt werden.

Das dem Fachmann bekannte Gegendruck-Kokillengießverfahren, auch bekannt als CPC (Counter Pressure Casting)-Gießverfahren, ist eine Weiterentwicklung des so genannten Niederdruck-Gießverfahrens und aus diversen Druckschriften, beispielsweise der EP 0 221 196 B1, der EP 0 564 774 B1 oder der DE 34 22 121 A1 bekannt.

Im Gegensatz zum, dem Fachmann ebenfalls bekannten Niederdruck-Gießverfahren wird allerdings nicht nur der Gießofen, sondern auch die Kokille bzw. Gießform mit Druckgas beaufschlagt.

Der eigentliche Gießvorgang erfolgt sowohl beim Niederdruck-Gießverfahren als auch beim Gegendruck-Kokillengießverfahren mit Hilfe eines Steigrohres, durch das die Schmelze nach oben in die Kokille gefördert wird.

Die Druckbeaufschlagung der Schmelze im Ofen zum Hochfördern der Schmelze in die Kokille wird jedoch beim Gegendruck-Kokillengießverfahren durch eine Druckdifferenz herbeigeführt, indem der Gasdruck in der Kokille etwas abgesenkt wird. Dadurch entsteht ein Überdruck im Gießofen, der für das Hochsteigen der Schmelze in die Kokille ausreicht.

Aus der EP 1 733 823 A1, der EP 0 398 168 A1, der GB 1 471 882 A1 und der EP 0 253 692 A1 sind weitere Anlagen zum Gießen bzw. Gießverfahren bekannt. Nachteilig an den bekannten Anlagen ist, dass einige Arbeitsgänge, die nicht unmittelbar mit dem eigentlichen Gießvorgang verbunden sind, sehr arbeitsintensiv sind. Zudem sind die Umrüstzeiten, insbesondere zum Wechseln der Gießform oder zum Neubeschicken eines Ofens mit Schmelze, relativ lang.

Der Erfindung liegt daher die Aufgabe zugrunde, ein Verfahren zur Herstellung von Gussstücken durch Gießen unter Druck, insbesondere durch Gegendruck-Kokillengießen oder insbesondere durch Niederdruck-Kokillengießen bereitzustellen, bei denen der Automatisierungsgrad und die Regelungsqualität der Anlage sowie des Verfahrens und somit die Produktivität erhöht werden können. Zudem sollen die Umrüstzeiten verkürzt und arbeitsintensive Schritte erleichtert werden, um so eine Produktivitätssteigerung zu erreichen.

Dabei wird unter dem Begriff "Gießen unter Druck" das Gießen unter bzw. bei Überdruck, Normaldruck oder Unterdruck verstanden, wobei je nach Anwendungsfall ein oder mehrere dieser Gießverfahren vorteilhaft sein können. Unter diese Gießverfahren fallen beispielsweise auch das Kippgießverfahren, das Bodengießverfahren, das Seitengießverfahren oder das Kopfgießverfahren, wobei auch hier je nach Anwendungsfall ein oder mehrere dieser Gießverfahren vorteilhaft sein können.

Eine Anlage zum Gießen unter Druck, insbesondere eine Gegendruck-Kokillengießanlage oder insbesondere Niederdruck-Kokillengießanlage, weist wenigstens eine Gießvorrichtung aus einer unteren hermetisch abdichtbaren Kammer und einer oberen, vorzugsweise hermetisch abdichtbaren Kammer auf, die durch eine Zwischenplatte bzw. Formaufspannplatte voneinander getrennt sind. Kommt es auf die hermetische Abdichtbarkeit der oberen Kammer nicht an, kann die Kammer quasi auch nur ein Gestell umfassen, wie es insbesondere bei einer Niederdruck-Kokillengießanlage der Fall sein kann. Die untere Kammer weist einen Ofen mit Schmelze auf oder wird durch diesen gebildet. In der oberen Kammer ist eine in etwa horizontal geteilte Gießform angeordnet, die aus einer unteren Gießformhälfte, welche auf der Zwischenplatte bzw. der Formaufspannplatte angeordnet ist, und einer oberen Gießformhälfte, welche unter einer oberen, vertikal bewegbaren Tragkonstruktion, vorzugsweise einer weiteren Platte, angeordnet ist, besteht. Die obere und/oder die untere Gießformhälfte können aus einzelnen Formteilen gebildet sein. Der Ofen mit Schmelze und die Gießform sind über wenigstens ein, vorzugsweise an der Zwischenplatte bzw. der Formaufspannplatte montiertes Steigrohr miteinander verbunden.

Weiters kann vorgesehen sein, dass die obere Gießformhälfte aus der horizontalen Position bis in eine etwa vertikale Position schwenkbar ist, derart, dass die Innenfläche der Gießformhälfte, vorzugsweise durch eine Person, arbeitserleichternd und zeitsparend behandelbar ist.

Statt zwischen der unteren Gießformhälfte und der oberen Gießformhälfte herumzukriechen, um Reinigungsvorgänge, das Aufbringen von Schlichte oder Korrekturen an der Innenfläche der Gießformhälfte durchzuführen, kann die mit dieser Behandlung befasste Person diese Arbeiten mit einer ernormen Zeitersparnis durchführen, indem die Person diese Arbeiten vor der Gießvorrichtung stehend ausführt. Dies führt zu einer signifikanten Produktivitätssteigerung.

Gleiches gilt, wenn die untere Gießformhälfte aus der horizontalen Position in eine etwa vertikale Position verschwenkbar ist, derart, dass die Innenfläche der Gießformhälfte, vorzugsweise durch eine Person, arbeitserleichternd und zeitsparend behandelbar ist.

Die Erfindung betrifft entsprechend allgemein ein Verfahren zum Gießen unter Druck.

Bei der erfindungsgemäßen Verfahren zum Gießen unter Druck kann es sich vorteilhaft um eine Säulengießanlage handeln.

Für bestimmte Anwendungsfälle kann es von Vorteil sein, wenn es sich bei der Anlage zum Gießen unter Druck um eine Unterdruckgießanlage, insbesondere eine Vakuumgießanlage handelt.

Für gewisse Anwendungsfälle kann es von Vorteil sein, wenn die Anlage zum Gießen unter Druck eine Gegendruck-Kokillengießanlage ist.

Für andere Anwendungsfälle kann es von Vorteil sein, wenn die Anlage zum Gießen unter Druck eine Niederdruck-Kokillengießanlage.

Für einige Anwendungsfälle kann es von Vorteil sein, wenn die Anlage zum Gießen unter Druck eine Schwerkraft-Kokillengießanlage ist.

Für wieder andere Anwendungsfälle kann es von Vorteil sein, wenn die Anlage zum Gießen unter Druck eine Kippgießanlage ist.

Für manche Anwendungsfälle kann es von Vorteil sein, wenn die Anlage zum Gießen unter Druck eine Kopfgießanlage ist.

Für bestimmte Anwendungsfälle kann es von Vorteil sein, wenn die Anlage zum Gießen unter Druck eine Bodengießanlage ist.

Für viele Anwendungsfälle kann es von Vorteil sein, wenn die Anlage zum Gießen unter Druck eine Seitengießanlage ist.

Es kann zweckmäßig sein, wenn die Gießformhälfte um eine horizontal verlaufende Schwenkachse, welche auf derjenigen Seite der Gießvorrichtung verläuft, von der aus die Innenfläche der Gießformhälfte, vorzugsweise durch eine Person, behandelt werden soll, schwenkbar ist.

Als besonders vorteilhaft kann es sein, wenn die Gießformhälfte um bis zu 135°, vorzugsweise um bis zu 90°; besonders bevorzugt um bis zu 85°, aus der horizontalen Position schwenkbar ist.

Vorzugsweise kann die obere Gießformhälfte nach unten schwenkbar sein. Vorzugsweise kann die untere Gießformhälfte nach oben schwenkbar sein.

Für die Druckversorgung der unteren Kammer bzw. des unteren Druckraums bzw. Ofeninnenraums und gegebenenfalls (beispielsweise im Falle einer Gegendruck-Kokillengießanlage) für die Druckversorgung der oberen Kammer bzw. des oberen Druckraums über entsprechende Druckleitungen kann es von Vorteil sein, wenn jeweils zwei parallel geschaltete Ventile vorgesehen sind, nämlich ein großes Ventil zur Hauptfüllung des Druckraums mit Druckmedium und ein kleines Ventil zur präziseren Druckeinstellung innerhalb der Druckraums.

Zweckmäßigerweise kann jeweils eine Vorsteuerung zur Regelung jedes Ventils vorgesehen sein, welche als Kennfeld oder als mathematisches Modell realisierbar ist.

Zur Füllung der Druckräume wird vorteilhaft zuerst das kleine Ventil auf etwa 40 bis 60 %, vorzugsweise auf etwa 45 bis 55%, besonders bevorzugt auf etwa 50% geöffnet, dann wird das große Ventil mit dem Stellwert aus der Vorsteuerung, korrigiert um den voreingestellten Durchfluss des kleinen Ventils, beaufschlagt, und schließlich wird mit dem kleinen Ventil der Druck präzise geregelt.

Durch eine derart ausgebildete Druckversorgung kann eine höhere Produktivität erreicht und die Regelungsqualität deutlich verbessert werden.

Es kann weiterhin vorteilhaft sein, wenn zwei Gießvorrichtungen, insbesondere zwei Säulengießvonichtungen bzw. -maschinen, vorgesehen sind, welche mit Abstand nebeneinander angeordnet sind, wobei zwischen den Gießvorrichtungen ein Manipulator zur Handhabung von Werkstücken oder Werkzeugen beider Gießvorrichtungen angeordnet ist. Geeignete Manipulatoren sind dem Fachmann bekannt. Die erfindungsgemäße Anordnung führt zu einem erhöhten Automatisierungsgrad und zu einer messbaren Produktivitätssteigerung.

Zur Produktivitätssteigerung kann ein Schienensystem vorgesehen sein, auf dem wenigstens ein Schlitten zur vollautomatischen Aufnahme bzw. Entnahme und vollautomatischen Abgabe bzw. Überführung eines Ofens angeordnet ist, der zwischen der wenigstens einen Gießvorrichtung und einer entfernt davon liegenden Bereitstellungsposition pendelt, derart dass der Schlitten einen Ofen an der Bereitstellungsposition aufnimmt und diesen in die, noch nicht mit einem Ofen versehene Gießvonichtung überführt, oder dass der Schlitten einen Ofen aus der Gießvorrichtung entnimmt und diesen an eine freie Stelle der Bereitstellungsposition, insbesondere zur Neubeschickung mit Schmelze, abgibt. Diese Ausgestaltung führt dazu, dass Umrüstzeiten von etwa 8 Stunden auf überraschend nur 15 Minuten verkürzt werden konnten.

Zweckmäßigerweise kann ein Schienensystem vorgesehen sein, auf dem wenigstens ein Schlitten zur vollautomatischen Aufnahme bzw. Entnahme und vollautomatischen Abgabe bzw. Überführung einer Gießform oder Gießformhälfte angeordnet ist, der zwischen der wenigstens einen Gießvorrichtung und einer entfernt davon liegenden Bereitstellungsposition pendelt, derart dass der Schlitten eine Gießform oder Gießformhälfte an der Bereitstellungsposition aufnimmt und diese in die, noch nicht mit einer Gießform oder Gießformhälfte versehene Gießvorrichtung überführt, oder dass der Schlitten eine Gießform oder Gießformhälfte aus der Gießvorrichtung entnimmt und diese an eine freie Stelle der Bereitstellungsposition zur weiteren Verwendung, insbesondere zur Zwischenlagerung oder zum Austausch, abgibt. Auch hier werden Umrüstzeiten wesentlich verkürzt. Der Automatisierungsgrad wird erhöht und die Produktivität der Anlage gesteigert.

Zweckmäßigerweise kann der Schlitten so ausgebildet sein, dass mehrere, vorzugsweise zwei nebeneinander angeordnete Ofenpositioniersteilen zur vollautomatischen Aufnahme bzw. Entnahme und vollautomatischen Abgabe bzw. Überführung der Öfen vorgesehen sind. Anstelle eines Schlittens mit mehreren Ofenpositionierstellen können auch mehrere Schlitten mit jeweils einer Ofenpositionierstelle aneinandergekoppelt sein. Eine Kombination aus wenigstens einem Schlitten mit mehreren Ofenpositionierstellen und wenigstens einem Schlitten mit einer Ofenpositionierstelle ist auch möglich. Erreicht werden soll Folgendes: Bei Vorhandensein von mehreren, vorzugsweise von zwei Ofenpositionierstellen im Schlitten besteht die Möglichkeit, zeitsparend auf dem Weg zwischen einer Bereitstellungsposition und der Gießvorrichtung einen mit Schmelze versehenen Ofen in einer Ofenpositionierstelle des Schlittens mitzunehmen, aus der Gießvorrichtung einen anderen, insbesondere leeren Ofen in eine zweite, noch freie Ofenpositionierstelle des Schlittens aufzunehmen, anschließend den mit Schmelze versehenen Ofen aus der ersten Ofenpositionierstelle In die ofenlose Gießvorrichtung zu überführen, um schließlich den bereits aufgenommenen anderen, insbesondere leeren Ofen zeitsparend auf dem Weg zwischen Gießvorrichtung und Bereitstellungsposition mitzunehmen, damit dieser in eine freie Stelle der Bereitstellungsposition zur weiteren Verwendung, insbesondere zur Neubeschickung mit Schmelze überführt werden kann. Diese Ausgestaltung führt dazu, dass Umrüstzeiten noch weiter verkürzt werden können.

Vorteilhaft kann der Schlitten so ausgebildet sein, dass mehrere, vorzugsweise zwei nebeneinander angeordnete Formpositionierstellen zur vollautomatischen Aufnahme bzw. Entnahme und vollautomatischen Abgabe bzw. Überführung der Gießformen oder Gießformhälften vorgesehen sind. Anstelle eines Schlittens mit mehreren Formpositionierstellen können auch mehrere Schlitten mit jeweils einer Formpositionierstelle aneinandergekoppelt sein. Eine Kombination aus wenigstens einem Schlitten mit mehreren Formpositionierstellen und wenigstens einem Schlitten mit einer Formpositionierstelle ist auch möglich. Erreicht werden soll Folgendes: Bei Vorhandensein von mehreren, vorzugsweise von zwei Formpositionierstellen im Schlitten besteht die Möglichkeit, zeitsparend auf dem Weg zwischen einer Bereitstellungsposition und der Gießvorrichtung eine neue Gießform oder Gießformhälfte in einer Ofenpositionierstelle des Schlittens mitzunehmen, aus der Gießvorrichtung dann eine ausgediente Gießform oder Gießformhälfte in eine zweite, noch freie Formpositionierstelle des Schlittens aufzunehmen, anschließend die neue Gießform oder Gießformhälfte aus der ersten Formpositionierstelle in die ohne Gießform oder Gießformhälfte versehene Gießvorrichtung zu überführen, um schließlich die bereits aufgenommene ausgediente Gießform oder Gießformhälfte zeitsparend auf dem Weg zwischen Gießvorrichtung und Bereitstellungsposition mitzunehmen, damit diese in eine freie Stelle der Bereitstellungsposition zur weiteren Verwendung überführt werden kann. Diese Ausgestaltung führt dazu, dass Umrüstzeiten noch weiter verkürzt werden können.

Es kann von Vorteil sein, wenn der Schlitten wenigstens zwei Ebenen aufweist, wobei eine untere Ebene zur vollautomatischen Aufnahme bzw. Entnahme und vollautomatischen Abgabe bzw. Überführung des Ofens, und eine untere Ebene zur vollautomatischen Aufnahme bzw. Entnahme und vollautomatischen Abgabe bzw. Überführung der Gießform oder Gießformhätfte vorgesehen ist. Dadurch kann sowohl ein Umrüsten des Ofens als auch ein Umrüsten der Gießform parallel durchgeführt werden. Zudem ist für beide Umrüstarten vorteilhaft nur ein Schlitten erforderlich.

Vorteilhaft kann die Ebene in horizontaler und/oder in vertikaler Richtung verfahrbar sein.

Für bestimmte Anwendungsfälle kann es von Vorteil sein, wenn dass Schienensystem im Boden versenkt ist. Für bestimmte andere Anwendungsfälle kann es aber auch von Vorteil sein, wenn das Schienensystem auf dem Boden positioniert ist.

Es kann vorteilhaft sein, wenn die Zwischenplatte bzw. die Formaufspannplatte vorgegebene Temperierkanäle, vorzugsweise Kühlkanäle, aufweist, wobei diese in, auf der Zwischenplatte bzw. der Aufspannplatte, vorzugsweise im Randbereich, angeordnete Anschlüsse für außerhalb der Gießvorrichtung angeordnete Temperierleitungen, insbesondere für Kühlleitungen, enden. Damit behindern die Temperierleitungen nicht das Umrüsten der Gießform oder des Ofens.

Zudem kann so gegenüber dem Stand der Technik auf eine zusätzliche Kühlplatte bzw. einen so genannten Kühlstein, welche gemäß Stand der Technik zwischen Zwischenplatte bzw. Formaufspannplatte und der unteren Gießformhälfte bzw. Gießform angeordnet war, verzichtet werden. Die zusätzliche Kühlplatte hatte gemäß Stand der Technik den Zweck, kühlende Medien, insbesondere Kühlwasser oder Kühlluft, von außen in die obere Kammer und entsprechend zur Gießform zu führen. Durch Verlegung der Temperierkanäle, vorzugsweise Kühlkanäle, in die Zwischenplatte bzw. Formaufspannplatte, auf der die Gießform oder die untere Gießformhälfte direkt montiert ist, kann die Temperierung der Gießform besser gesteuert werden. Gleichzeitig kann durch Wegfall der zusätzlichen Kühlplatte das Kammervolumen besser ausgenutzt werden und die Betriebssicherheit der Gießvorrichtung verbessert werden, da weniger Dichtstellen anfallen. Die Dichtheit des Kühlsystems wird so optimiert.

Eine weitere Produktivitätssteigerung wird durch eine Erhöhung der Lebensdauer der mit Temperierkanälen versehenen Zwischenplatte bzw. Formaufspannplatte erreicht, indem die Innenflächen der Temperierkanäle vernickelt sein können. Dies führt insbesondere zu einem erhöhten Korrosionsschutz.

Es kann zweckmäßig sein, wenn jede Temperierleitung, insbesondere Kühlleitung, individuell steuerbar, insbesondere zeitsteuerbar, ist.

Die Erfindung betrifft ein Druckgießverfahren, vorzugsweise ein Gegendruck-Kokillengießverfahren und/oder ein Niederdruck-Kokillengießverfahren, insbesondere unter Verwendung einer Anlage bei dem unter der Einwirkung eines Druckunterschieds die Schmelze aus einem in einer hermetisch abgedichteten Kammer befindlichen Ofen durch ein Steigrohr befördert wird und den Hohlraum einer Gießform ausfüllt, die in einer anderen vorzugsweise hermetisch abgedichteten Kammer angeordnet ist, wo das Gussstück erstarrt und worauf es aus der Gießform, vorzugsweise mittels eines Manipulators, entnommen wird, wobei nach der Entnahme des Gussstücks die Vorbereitung für einen neuen Gießzyklus folgt, indem die obere Gießformhälfte aus einer horizontalen Position derart verschwenkt wird, dass die Innenfläche der Gießformhälfte, vorzugsweise durch eine Person, arbeitserleichternd und zeitsparend behandelt, vorzugsweise gereinigt, geschlichtet und/oder korrigiert, wird.

Die Erfindung betrifft entsprechend allgemein ein Druckgießverfahren, insbesondere unter Verwendung einer Anlage, bei dem unter der Einwirkung eines Druckes eine Schmelze in den Hohlraum einer Dauergießform eingebracht wird, in welcher das Gussstück erstarrt und worauf es aus der Dauergießform, vorzugsweise zumindest unter Beteiligung eines Manipulators, entnommen wird, wobei nach der Entnahme des Gussstücks die Vorbereitung für einen neuen Gießzyklus folgt, indem wenigstens ein Gießformteil, insbesondere eine Gießformhälfte, nach dem Öffnen der Dauergießform in eine Position geschwenkt wird, in welcher die Innenfläche dieses Gießformteils, vorzugsweise durch eine Person, arbeitserleichternd und zeitsparend behandelt, vorzugsweise gereinigt, geschlichtet und/oder korrigiert, wird.

Es kann vorteilhaft sein, wenn nach der Entnahme des Gussstücks die Vorbereitung für einen neuen Gießzyklus folgt, indem - bezogen auf andere Vorbereitungsschritte - zur gleichen Zeit, vorher oder später die untere Gießformhälfte aus einer horizontalen Position derart verschwenkt wird, dass die Innenfläche der Gießformhälfte, vorzugsweise durch eine Person, arbeitserleichternd und zeitsparend behandelt, vorzugsweise gereinigt, geschlichtet und/oder korrigiert, wird.

Es kann zweckmäßig sein, wenn nach der Entnahme des Gussstücks die Vorbereitung für einen neuen Gießzyklus folgt, indem - bezogen auf andere Vorbereitungsschritte - zur gleichen Zeit, vorher oder später die Gießformhälfte um eine horizontal verlaufende Schwenkachse, welche auf derjenigen Seite der Gießvorrichtung verläuft, von der aus die Innenfläche der Gießformhälfte, vorzugsweise durch eine Person, behandelt werden soll, verschwenkt wird.

Es kann vorteilhaft sein, wenn nach der Entnahme des Gussstücks die Vorbereitung für einen neuen Gießzyklus folgt, indem - bezogen auf andere Vorbereitungsschritte - zur gleichen Zeit, vorher oder später die Gießformhälfte die Gießformhälfte um bis zu 135°, vorzugsweise um bis zu 90°; besonders bevorzugt um bis zu 85°, verschwenkt wird.

Es kann von Vorteil sein, wenn nach der Entnahme des Gussstücks die Vorbereitung für einen neuen Gießzyklus folgt, indem - bezogen auf andere Vorbereitungsschritte - zur gleichen Zeit, vorher oder später die obere Gießformhälfte nach unten verschwenkt wird und/oder die untere Gießfonnhätfte nach oben verschwenkt wird.

Zweckmäßigerweise kann die Druckversorgung der unteren Kammer bzw. des unteren Druckraums bzw. Ofeninnenraums und gegebenenfalls die Druckversorgung der oberen Kammer bzw. des oberen Druckraums über Druckleitungen mit jeweils zwei parallel geschalteten Ventilen erfolgen, nämlich über ein großes Ventil zur Hauptfüllung des Druckraumes und über ein kleines Ventil zur präzisen Druckeinstellung innerhalb der Druckraums. Die Regelungen der Ventile arbeiten jeweils mit einer Vorsteuerung, die als Kennfeld oder als mathematisches Modell realisiert wird, wobei zur Füllung der Druckräume zuerst das kleine Ventil auf etwa 40 bis 60 %, vorzugsweise auf etwa 45 bis 55%, besonders bevorzugt auf etwa 50% geöffnet wird, dann das große Ventil mit dem Stellwert aus der Vorsteuerung, korrigiert um den voreingestellten Durchfluss des kleinen Ventils, beaufschlagt wird, und schließlich mit dem kleinen Ventil der Druck präzise geregelt wird.

Durch eine derart gesteuerte Druckversorgung kann eine höhere Produktivität erreicht und die Regelungsqualität deutlich verbessert werden.

Es kann vorteilhaft sein, wenn nach der Entnahme des Gussstücks die Vorbereitung für einen neuen Gießzyklus folgt, indem - bezogen auf andere Vorbereitungsschritte - zur gleichen Zeit, vorher oder später mittels eines auf einem Schienensystem verfahrbaren Schlittens ein Ofen aus der Gießvorrichtung entnommen, dann zu einer Bereitstellungsposition befördert, und dort an einer freien Stelle einer insbesondere zur Neubeschickung mit Schmelze, abgegeben wird, und dass direkt anschließend ein bereits bereitgestellter, mit Schmelze versehener Ofen von dem Schlitten aufgenommen, zur Gießvorrichtung befördert und in die Gießvorrichtung überführt wird.

Eine Weiterbildung der Erfindung kann vorsehen, dass der Schlitten mehr als eine, vorzugsweise zwei Ofenpositionierstellen aufweist, so dass zum Wechsel eines in der Gießvorrichtung angeordneten Ofens gegen ein mit Schmelze gefüllten Ofen, der Schlitten zunächst den mit Schmelze gefüllten Ofen in seiner ersten Ofenpositionierstelle aufnimmt, anschließend zur Gießvorrichtung fährt, dort den einen Ofen in seine zweite, noch freie Ofenpositionierstelle aufnimmt, anschließend den mit Schmelze versehenen Ofen aus der ersten Ofenpositionierstelle in die ofenlose Gießvorrichtung überführt, um schließlich den bereits aufgenommenen leeren Für einige Einsatzfälle kann es von Vorteil sein, wenn das Druckgießverfahren ein Seitengießverfahren ist.

Für gewisse Einsatzfälle kann es von Vorteil sein, wenn das Druckgießverfahren ein Kopfgießverfahren ist.

Die Erfindung betrifft weiterhin ein Verfahren vorzugsweise eines Gegendruck-Kokillengießverfahrens, zur Herstellung von Bauteilen aus dem Anwendungsbereich Fahrwerksguss, namentlich von radführenden Bauteilen, insbesondere Lenkern, Längslenkern, Querlenkern, Gussecken, Gussknoten, Rahmen usw., von radtragenden Bauteilen, insbesondere Schwenklagern, Radträgern, Achsschenkeln, von Einspritzpumpengehäusen oder dergleichen.

Es kann vorteilhaft sein, ein Verfahren nach Anspruch 1 zur Herstellung von hoch belasteten Sicherheitsbauteilen, vorzugsweise von Felgen, von Motorkomponenten, insbesondere von Motorblöcken, Saugkrümmern oder Kurbelgehäusen, von druckdichten Bauteilen, von Einspritzpumpengehäusen oder dergleichen zu verwenden.

Es kann auch zweckmäßig sein, ein Niederdruck-Kokillengießverfahren zur Herstellung von Fahrwerksteilen, vorzugsweise von radführenden Bauteilen, insbesondere Lenkern, Längslenkern, Querlenkern, Gussecken, Gussknoten, Rahmen oder dergleichen, oder von hoch belasteten Sicherheitsbauteilen, vorzugsweise von Felgen, von Motorkomponenten, insbesondere von Motorblöcken, Saugkrümmern oder Kurbelgehäusen, von druckdichten Bauteilen, von Einspritzpumpengehäusen oder dergleichen zu verwenden.

Weitere Einzelheiten der Erfindung ergeben sich aus der nachfolgenden Beschreibung in Verbindung mit der Zeichnung. In dieser zeigen:
- Fig. 1: schematisch in Seitenansicht eine erfindungsgemäße Gießvorrichtung,
- Fig. 2: schematisch in Draufsicht eine erfindungsgemäße Anlage mit und
- Fig. 3: schematische in Draufsicht eine zweite erfindungsgemäße Anlage.

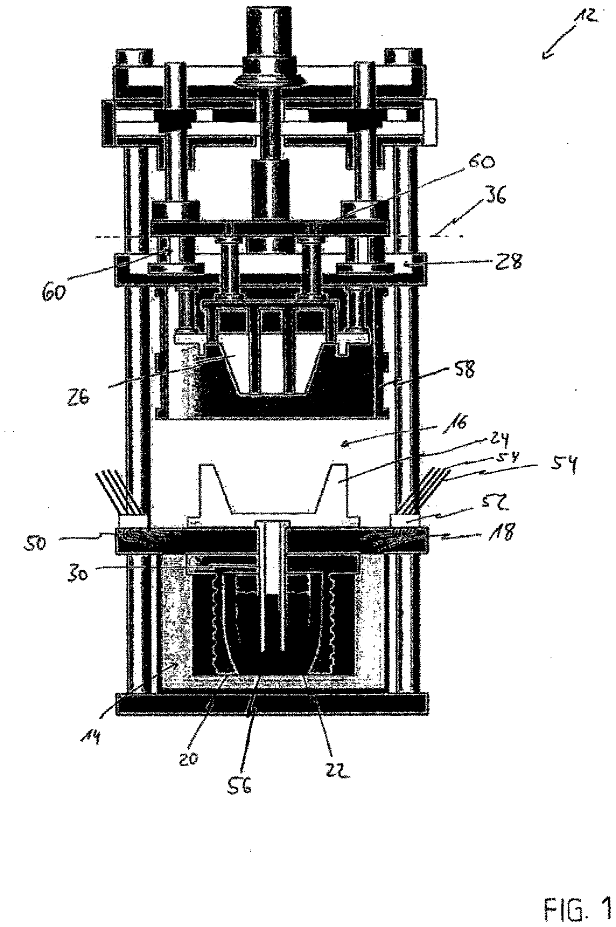

Werden in den Fig. 1 bis 3 gleiche Bezugsziffern verwendet, so bezeichnen diese gleiche Teile bzw. Bereiche.

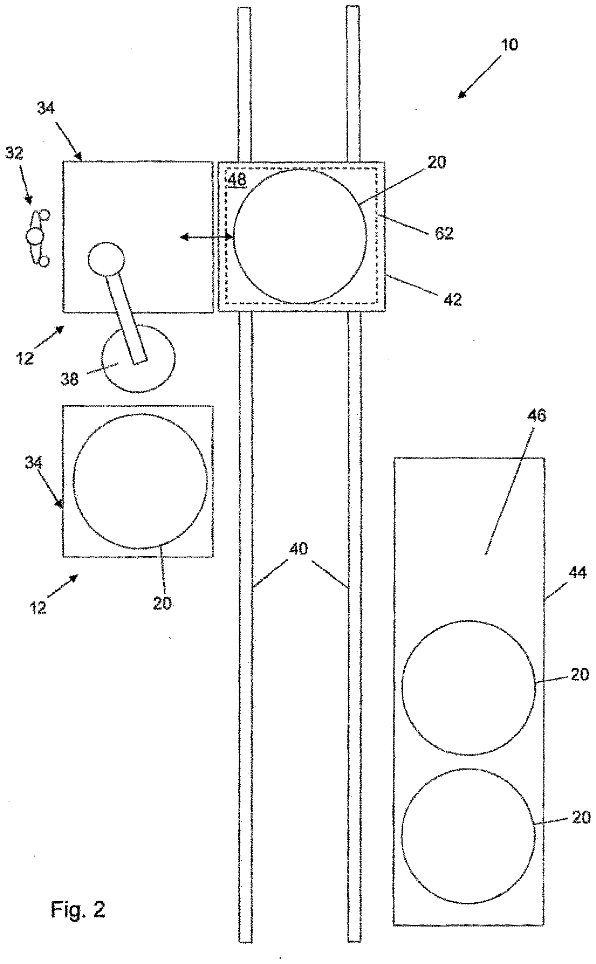

Die in Fig. 2 schematisch dargestellte Gegendruck-Kokillengießanlage 10 umfasst zwei mit Abstand nebeneinander angeordnete Gießvorrichtungen 12. Eine solche Gießvorrichtung ist schematisch in Fig. 1 dargestellt.

Die Gießvorrichtung 12 weist eine untere hermetisch abdichtbare Kammer 14 und eine obere hermetisch abdichtbare Kammer 16 auf, welche durch eine Zwischenplatte bzw. Formaufspannplatte 18 voneinander getrennt sind.

In der unteren Kammer 14 ist ein Ofen 20 vorgesehen, der einen Tiegel 56 mit Schmelze 22 aufweist.

In der oberen Kammer 16 ist eine in etwa horizontal geteilte Gießform angeordnet, wobei diese aus einer unteren Gießformhälfte 24, welche auf der Zwischenplatte bzw. der Formaufspannplatte 18 angeordnet ist, und einer oberen Gießformhälfte 26, welche unter einer oberen, vertikal bewegbaren Tragkonstruktion 28, beispielsweise einer weiteren Platte, angeordnet ist, besteht. Diese Tragkonstruktion 28 weist zudem eine Art Haube 58 auf, welche beim vertikalen Verfahren der Tragkonstruktion 28 nach unten auf die Zwischenplatte bzw. die Formaufspannplatte 18 zur Ausbildung der hermetisch abgedichteten oberen Kammer 16 aufsetzt.

Fig. 1 zeigt eine Gießvorrichtung 12 in einem Zustand, in dem die Gießform geöffnet und somit die Haube 58 von der Zwischenplatte bzw. der Formaufspannplatte 18 abgehoben ist.

Der mit Schmelze 22 versehene Ofen 20 bzw. Tiegel 56 und der durch die beiden Gießformhälften 24, 26 im geschlossenen Zustand ausgebildete Gießformhohlraum sind über ein, an der Zwischenplatte bzw. der Formaufspannplatte 18 montiertes Steigrohr 30 miteinander verbunden.

Die obere Gießformhälfte 26 ist nun aus der horizontalen Position um beispielsweise etwa 85° nach unten in eine etwa vertikale Position schwenkbar, wobei die Innenfläche der Gießformhälfte 26 zu einer die Fig. 1 betrachtenden Person 32 zeigen würde. Eine Person 32, die dann vor der Gießvorrichtung 12, vorzugsweise in etwa der Höhe der Zwischenplatte bzw. der Formaufspannplatte 18 steht, kann dann besonders einfach die Gießformhälfte 26 behandeln, insbesondere reinigen, schlichten und/oder korrigieren.

In Fig. 1 sind rein schematisch Lager 60 und eine Schwenkachse 36 dargestellt, welche die Verschwenkbarkeit der oberen Gießformhälfte 26 verdeutlichen sollen. Vorzugsweise sind zum Verschwenken der oberen Gießformhälfte 26 geeignete hier nicht dargestellte Kraftzylinder vorgesehen.

Zwischen den in Fig. 2 mit Abstand nebeneinander angeordneten zwei Gießvorrichtungen 12 ist ein Manipulator 38 zur Handhabung von Werkstücken oder Werkzeugen bzw. Gießformen oder Gießformhälften beider Gießvorrichtungen 12 angeordnet.

Auf der hinteren Seite der beiden Gießvorrichtungen 12 ist ein Schienensystem 40 vorgesehen, auf dem ein Schlitten 42 zur vollautomatischen Aufnahme bzw. Entnahme und vollautomatischen Abgabe bzw. Überführung eines Ofens 20 angeordnet ist.

Der Schlitten 42 pendelt hierbei zwischen den Gießvorrichtungen 12 und einer entfernt davon liegenden Bereitstellungsposition 44.

In den Fig. 2 ist dargestellt, wie der Schlitten 42 vor einer Gießvorrichtung 12 hält, um einen mit Schmelze befüllten Ofen 20 aus seiner Ofenpositionierstelle 62 in die, noch nicht mit einem Ofen 20 versehene Gießvorrichtung 12 zu überführen, wobei hierzu die Ebene 48 in diese Gießvorrichtung verfahren wird. Zuvor hat der Schlitten 42 diesen Ofen unter Hinterlassen einer freien Stelle 46 an der Bereitstellungsposition 44 aufgenommen.

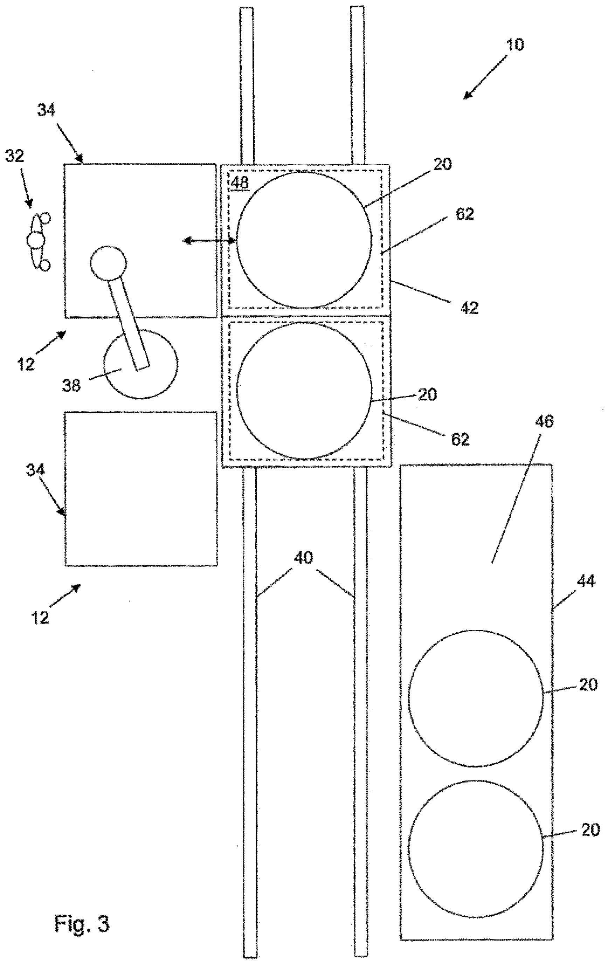

In Fig. 3 weist der Schlitten gegenüber dem in Fig. 1 dargestellten eine weitere Ofenpositionierstelle 62 auf. Dadurch ist ein zeitsparender Wechsel eines leeren in der Gießvorrichtung angeordneten Ofens gegen ein mit Schmelze gefüllten Ofen möglich. Der Schlitten 42 nimmt zunächst den mit Schmelze gefüllten Ofen in einer ersten Ofenpositionierstelle 62 aus der Bereitstellungsposition 44 auf, fährt anschließend zur Gießvorrichtung 12, um dort den leeren Ofen in eine zweite, noch freie Ofenpositionierstelle 62 aufzunehmen, überführt anschließend den mit Schmelze versehenen Ofen aus der ersten Ofenpositionierstelle 62 in die ofenlose Gießvorrichtung 12, um dort den leeren Ofen in eine zweite, noch freie Ofenpositionierstelle 62 aufzunehmen, überführt anschließend den mit Schmelze versehenen Ofen aus der ersten Ofenpositionierstelle 62 in die ofenlose Gießvorrichtung 12, um schließlich den bereits aufgenommenen leeren Ofen zur Bereitstellungsposition 44 mitzunehmen, damit dieser in eine freie Stelle 46 der Bereitstellungsposition 44 zur Neubeschickung mit Schmelze überführt werden kann.

Nicht nur eine Erleichterung für die Umrüstung der Gießvorrichtung 12 stellen auch die auf der Zwischenpfatte bzw. der Formaufspannplatte 18 vorzugsweise im Randbereich angeordneten Anschlüsse 52 dar, die auf der einen Seite mit den in der Zwischenplatte bzw. der Formaufspannplatte 18 vorgesehenen Temperierkanälen 52 und auf den anderen Seite mit den außerhalb der Gießvorrichtung 12 angeordnete Temperierteitungen 54, insbesondere Kühlleitungen, verbunden sind, wobei dem Austausch der Gießform bzw. der Gießformhälften 24, 26 diese Temperierteitungen nicht im Wege stehen.

Vielmehr kann durch die in der Zwischenplatte bzw. der Formaufspannplatte 18 angeordneten Temperierkanäle 50 auf eine gemäß dem Stand der Technik erforderliche zusätzliche Kühlplatte bzw. einen so genannten Kühlstein, welche gemäß Stand der Technik zwischen Zwischenplatte bzw. Formaufspannplatte 18 und der unteren Gießformhälfte bzw. Gießform 24 angeordnet war, verzichtet werden. Durch Verlegung der Temperierkanäle 50, vorzugsweise Kühlkanäle, in die Zwischenplatte bzw. Formaufspannplatte 18, auf der die Gießform oder die untere Gießformhälfte 24 direkt montierbar ist, kann die Temperierung der Gießform 24 wesentlich besser gesteuert werden. Gleichzeitig kann durch Wegfall der zusätzlichen Kühlplatte das obere Kammervolumen besser ausgenutzt werden und die Betriebssicherheit der Gießvorrichtung 12 verbessert werden, da weniger Dichtstellen anfallen. Die Dichtheit des Kühlsystems wird insgesamt optimiert.

### Bezugszeichenliste

### (ist Teil der Beschreibung)

- 10: Anlage
- 12: Gießvorrichtung
- 14: Kammer
- 16: Kammer
- 18: Zwischenplatte bzw. Formaufspannplatte
- 20: Ofen
- 22: Schmelze
- 24: untere Gießformhälfte
- 26: obere Gießformhälfte
- 28: Tragkonstruktion
- 30: Steigrohr
- 32: Person
- 34: Seite
- 36: Schwenkachse
- 38: Manipulator
- 40: Schienensystem
- 42: Schlitten
- 44: Bereitstellungsposition
- 46: freie Stelle
- 48: untere Ebene
- 50: Temperierkanäle
- 52: Anschlussstelle
- 54: Temperierleitungen
- 56: Tiegel
- 58: Haube
- 60: Lager
- 62: Ofenpositionierstelle

## Patentansprüche

1. Druckgießverfahren, bei dem unter der Einwirkung eines Druckunterschieds eine Schmelze aus einem in einer hermetisch abgedichteten unteren Kammer bzw. eines unteren Druckraums bzw. eines Ofeninnenraums befindlichen Ofen durch ein Steigrohr befördert wird und den Hohlraum einer Gießform ausfüllt wo das Gussstück erstarrt und worauf es aus der Gießform entnommen wird, **dadurch gekennzeichnet, dass** die Druckversorgung der unteren Kammer bzw. des unteren Druckraums bzw. Ofeninnenraums über zwei parallel geschaltete Ventile erfolgt, nämlich über ein erstes Ventil zur Hauptfüllung des Druckraumes und über ein zweites Ventil zur präzisen Druckeinstellung innerhalb des Druckraums, wobei das erste Ventil größer ist als das zweite Ventil.

## Claims

1. A die-casting method in which a melt is forwarded under the influence of a pressure difference from a hermetically sealed lower chamber and/or a lower pressure compartment and/or a furnace interior of a furnace through a riser tube, filling the cavity of a casting mold, where the cast piece solidifies and after which it is removed from the casting mold, **characterized in that** the pressure supply of the lower chamber and/or of the lower pressure compartment and/or furnace interior takes place via two valves that are switched in a parallel manner, namely via a first valve for a main charge of the pressure compartment and via a second valve for the precise pressure adjustment inside the pressure compartment, wherein the first valve is larger than the second valve.

## Revendications

1. Procédé de moulage sous pression dans lequel, sous l'action d'une différence de pression, une fonte est convoyée à partir d'un four se trouvant dans une chambre inférieure, étanchéifiée de manière hermétique, respectivement d'un espace de pression inférieur respectivement d'un espace interne de four, à travers un tube ascendant et remplit la cavité d'un moule où la pièce en fonte se solidifie et est alors retirée du moule, **caractérisé en ce que** l'alimentation en pression de la chambre inférieure respectivement de l'espace de pression inférieur respectivement de l'espace interne de four par l'intermédiaire de deux soupapes branchées en parallèle, à savoir par l'intermédiaire d'une première soupape pour le remplissage principal de l'espace de pression et par l'intermédiaire d'une deuxième soupape pour le réglage précis de la pression à l'intérieur de l'espace de pression, dans lequel la première soupape est plus grande que la deuxième soupape.
